# EUROPÄISCHE PATENTSCHRIFT

(11) **EP 2 208 982 B1**
(45) Veröffentlichungstag und Bekanntmachung des Hinweises auf die Patenterteilung: **28.06.2017**
(21) Anmeldenummer: 09177450.5
(22) Anmeldetag: 30.11.2009
(51) Int. Cl.: G01N 15/06, F02D 41/14, G01N 27/417, G01N 1/22, G01N 15/00, G01N 27/04

(54) **Abgas-Partikelsensor**
Exhaust gas particle sensor
Capteur de particules en gaz d'échappement

(30) Priorität: 20.01.2009 DE 102009000318
(43) Veröffentlichungstag der Anmeldung: 21.07.2010
(73) Patentinhaber: Robert Bosch GmbH, 70442 Stuttgart (DE)
(72) Erfinder: Rixecker, Georg, 70771, Leinfelden-Echterdingen (DE); Roesch, Sabine, 71254, Ditzingen (DE); Glanz, Uwe, 71679, Asperg (DE); Grabis, Johannes, 71272, Renningen (DE); Hagemann, Benjamin, 70839, Gerlingen (DE)

(56) Entgegenhaltungen:
- DE-A1-102005 016 395
- DE-A1-102006 046 837
- DE-A1-102007 021 913

## Beschreibung

Die vorliegende Erfindung betrifft einen Teilchensensor zur Detektion von Teilchen in einem Gasstrom, ein Verfahren zur Detektion von Teilchen mit einem solchen Teilchensensor sowie Verfahren zur Herstellung von solchen Teilchensensoren.

### Stand der Technik

In Zukunft muss der Rußausstoß während des Fahrbetriebes eines Kraftfahrzeugs nach dem Durchlaufen des Motors beziehungsweise eines Dieselpartikelfilters (DPF) per gesetzlicher Vorschrift überwacht und die Funktionalität dieser Überwachung sichergestellt werden (On Bord Diagnose -OBD). Darüber hinaus ist eine Beladungsprognose von Dieselpartikelfiltern sinnvoll um eine hohe Systemsicherheit bei wenigen effizienten, Kraftstoff sparenden Regenerationszyklen zu erreichen und kostengünstigere Filtermaterialien einzusetzen zu können.

Eine Möglichkeit hierzu bieten resistive Partikelsensoren, welche eine Widerstandsänderung eines Interdigitalelektrodensystems aufgrund von Teilchenanlagerung zur Detektion von Teilchen, insbesondere Rußpartikeln, heranziehen. Aufgrund der Funktionsweise ordnen sich resistive Partikelsensoren bei den sammelnden Prinzipien ein.

Derzeit sind resistive Teilchensensoren bekannt, bei denen zwei oder mehrere metallische, kammartig ineinandergreifende Interdigitalelektroden ausgebildet sind, wobei sich unter Einwirkung einer elektrischen Messspannung anlagernde leitfähige Teilchen die Elektroden kurzschließen und so mit steigender Teilchenmenge auf der Sensorfläche ein abnehmender Widerstand, beziehungsweise ein zunehmender Strom bei konstanter angelegter Spannung, zwischen den Elektroden messbar wird.
Zur Regeneration nach der Teilchenanlagerung werden derartige Teilchensensoren herkömmlicherweise mit Hilfe einer integrierten Heizvorrichtung von angelagerten Teilchen befreit.
Bei planaren Teilchensensoren ist das Messsignal meist von der räumlichen Ausrichtung des Teilchensensors und von den Strömungsverhältnissen abhängig.
Um dies zu verbessern, schlägt die DE 10 2004 043 A1 einen Partikelsensor vor, welcher ein radialsymmetrisches Heizelement aufweist, auf dessen Oberfläche ein Interdigitalelektrodensystem angeordnet ist. Derartige Partikelsensoren weisen jedoch eine verhältnismäßig große thermische Masse auf.
Eine große thermische Masse kann mit einer hohen Trägheit oder sogar "Blindzeit" des Sensors einhergehen. Dies liegt darin begründet, dass ein für die Teilchenanlagerung wichtiger Faktor die Thermophorese ist, welche durch eine Temperaturdifferenz zwischen Gasstrom und Partikelsensoroberfläche beeinflusst wird und zu einer verminderten Teilchenanlagerung führt, wenn der Partikelsensor heißer als der Gasstrom ist.
Weiterhin benötigt ein Sensor mit großer thermischer Masse auch eine große Heizleistung zur Regeneration des Interdigitalelektrodensystems.
Weitere Partikelsensoren sind aus DE 10 2007 021913 A1 und DE 10 2005 016395 A1 bekannt.

### Offenbarung der Erfindung

Gegenstand der vorliegenden Erfindung ist ein Teilchensensor, insbesondere ein Partikelsensor, zur Detektion von Teilchen in einem Gasstrom, welcher mindestens ein Interdigitalelektrodensystem aus mindestens zwei kammartig ineinandergreifenden Interdigitalelektroden, und ein Trägerelement umfasst, wobei in dem Trägerelement ein Messraum mit mindestens einer Gaszutrittsöffnung und mindestens einer Gasauslassöffnung ausgebildet ist, wobei mindestens ein Interdigitalelektrodensystem auf einer Fläche des Messraums angeordnet ist, dadurch gekennzeichnet dass das Trägerelement eine im Wesentlichen rotationssymmetrische Außenwandung aufweist. Dabei bedeutet "im Wesentlichen", dass partielle Abweichungen von einer Rotationssymmetrie, beispielsweise im Bereich des Messraums umfasst sind. Der erfindungsgemäße Teilchensensor beruht auf dem Prinzip, dass der zu untersuchende Gasstrom, beispielsweise ein Abgasstrom einer Brennkraftmaschine, ähnlich einem Kamin, durch die Gaszutrittsöffnung in den Messraum eintritt, an dem darin angeordneten Interdigitalelektrodensystem vorbeiströmt und durch die Gasauslassöffnung abgeführt wird.
Der erfindungsgemäße Teilchensensor hat den Vorteil, dass eine vorteilhafte, insbesondere besonders gerichtete und damit definierte, Überströmung des Interdigitalelektrodensystems erreicht, und auf ein, insbesondere inneres, Schutzrohr zur gerichteten Führung des Gasstroms verzichtet werden kann. Daraus resultiert, dass der erfindungsgemäße Teilchensensor vorteilhafterweise eine gleichmäßige und reproduzierbare Messfunktionalität aufweisen kann, welche unabhängig von einer Schutzrohrausführung und der Einbaulage sein kann. Darüber hinaus können durch eine Verringerung der Schutzrohre vorteilhafterweise Material- und Montagekosten verringert werden. Weiterhin wird das Interdigitalelektrodensystem vorteilhafterweise durch die Anordnung im Innern des Trägerelementes vor Beschädigungen geschützt, was die Robustheit des erfindungsgemäßen Teilchensensors erhöht. Darüber hinaus kann die innen liegende Anordnung des Interdigitalelektrodensystems besonders vorteilhaft in Bezug auf die Ausnutzung des für die Interdigitalelektrode verwendeten Platins sein, da es möglich ist den Bereich des Interdigitalelektrodensystems gezielter zu überströmen und damit effektiver zu nutzen.
Unter dem Begriff "Teilchen" werden im Sinn der vorliegenden Erfindung feste und/oder flüssige leitfähige Teilchen, beispielsweise leitfähige Partikel und/oder Tröpfchen, insbesondere Rußpartikel, verstanden.
Neben einem oder mehreren Interdigitalelektrodensystemen kann der erfindungsgemäße Teilchensensor mindestens eine Heizvorrichtungen und/oder mindestens eine Temperaturmessvorrichtungen umfassen. Vorzugsweise sind die Heizvorrichtung und/oder Temperaturmessvorrichtung in räumlicher Nähe zum Interdigitalelektrodensystem angeordnet. Beispielsweise können ein Interdigitalelektrodensystem, eine Temperaturvorrichtung und/oder eine Heizvorrichtung schichtförmig übereinander in der Messzelle angeordnet sein, wobei die einzelnen Schichten zumindest durch Isolationsschichten voneinander beabstandet sind. Zweckmäßigerweise sind die Schichten dabei derart angeordnet, dass das Interdigitalelektrodensystem dem Gasstrom zugänglich ist. Beispielsweise kann untere einem Interdigitalelektrodensystem eine Heizvorrichtung und/oder Temperaturmessvorrichtung angeordnet sein. Im Fall von mehreren Interdigitalelektrodensystemen, können in räumlicher Nähe jedes Interdigitalelektrodensystems jeweils eine Heizvorrichtung und/oder Temperaturmessvorrichtung angeordnet sein.

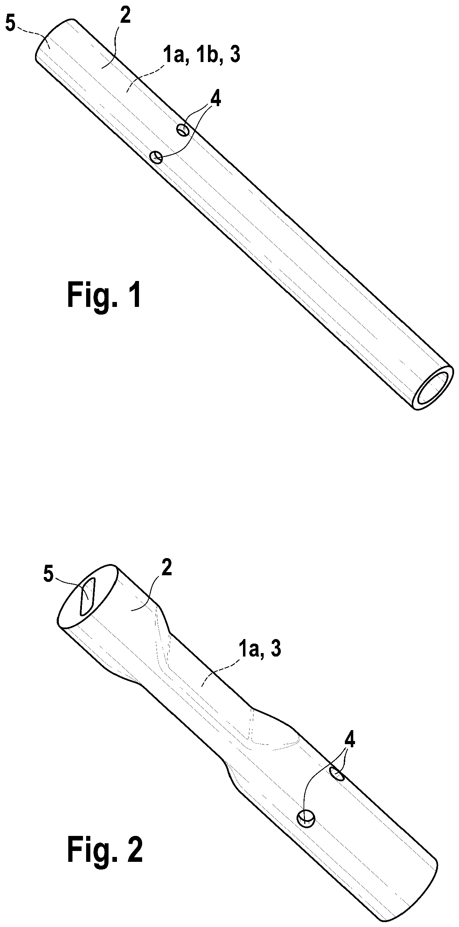

Erfindungsgemäß ist das Trägerelement im Wesentlichen rotationssymmetrisch ausgestaltet. Dabei bedeutet "im Wesentlichen", dass partielle Abweichungen von einer Rotationssymmetrie, beispielsweise im Bereich des Messraums (siehe Figuren 2 bis 5), umfasst sind. Diese Ausführungsform hat den Vorteil, dass ein ungerichteter, Schutzrohr unabhängiger Einbau ermöglicht wird.

Im Rahmen einer besonders bevorzugten Ausführungsform der vorliegenden Erfindung ist weist das Trägerelement im Bereich des Messraums eine verringerte Wandstärke auf. Beispielsweise kann das Trägerelement im Bereich des Messraums eine geringere Wandstärke aufweisen als in den übrigen Bereichen des Trägerelements. Zum Beispiel kann das Trägerelement im Bereich des Messraums eine Wandstärke von ≥ 50 µm bis ≤ 1000 µm, insbesondere von ≥ 100 µm bis ≤ 500 µm und/oder die Wandstärke des Trägerelements im Bereich des Messraums kann zu den Wandstärken des Trägerelements in den übrigen Bereichen in einem Verhältnis von ≥ 1:10 bis ≤ 1:1, insbesondere von ≥ 1:5 bis ≤ 1:2, stehen. Auf diese Weise kann die thermische Masse der Messzelle vorteilhafterweise weiterhin reduziert werden. Dies hat die Vorteile, dass die Messzelle der Temperatur des Gasstroms besser folgen kann, wodurch die Messdynamik, insbesondere nach heißen Phasen, verbessert und die Teilchenkonzentration auch nach einer Volllastfahrt schnell wieder bestimmt werden kann. Darüber hinaus wird durch eine reduzierte thermische Masse vorteilhafterweise auch der Heizleistungsbedarf zur Regeneration des Sensorelements verringert.

Im Rahmen der vorliegenden Erfindung kann der Messraum des Trägerelements grundsätzlich in verschiedenen Formen ausgestaltet sein.

Im Rahmen einer bevorzugten Ausführungsform der vorliegenden Erfindung weist der Messraum des Trägerelements einen kreisförmigen, ovalen, elliptischen, rechteckigen oder einen quasi rechteckigen Querschnitt auf. Dabei wird unter "quasi rechteckig" ein Rechteck mit abgerundeten Ecken verstanden. Auf diese Weise kann eine definierte und enge Überströmung des Interdigitalelektrodensystems erreicht werden.

Das Interdigitalelektrodensystem beziehungsweise die Interdigitalelektrodensysteme können im Rahmen der vorliegenden Erfindung auf verschiedene Arten in dem Messraum angeordnet sein.

Im Rahmen einer weiteren Ausführungsform der vorliegenden Erfindung bedeckt das Interdigitalelektrodensystem im Wesentlichen die gesamte Umfangsfläche des Messraums. Dabei bedeutet "im Wesentlichen", dass das Interdigitalelektrodensystem ≥ 70 % des Innenumfangs bedeckt. Zum Beispiel kann das Interdigitalelektrodensystem im Wesentlichen die gesamte Umfangsfläche eines Messraums mit einem im Wesentlichen runden, beispielsweise kreisförmigen, ovalen, elliptischen, insbesondere kreisförmigen, Querschnitt bedecken. Dies hat den Vorteil, dass sich ein quasi rotationssymmetrischer Aufbau ergibt, welcher bereits eine gute Einbaulageunabhängigkeit ermöglicht.

Im Rahmen einer ersten Ausgestaltung dieser Ausführungsform bedeckt das Interdigitalelektrodensystem ≥ 70 % bis ≤ 95 %, beispielsweise 85 %, der Umfangsfläche des Messraums, wobei ein streifenförmiger Bereich von ≥ 5 % bis < 30 %, beispielweise 15 %, der Umfangsfläche des Messraums unbedeckt ist. Dies hat sich bei der später näher erläuterten Herstellung durch einen Folientransfer als vorteilhaft herausgestellt. Vorzugsweise umläuft der streifenförmige, unbedeckte Bereich dabei die Umfangsfläche des Messraums spiralförmig. Auf diese Weise kann Einbaulagenunabhängigkeit vorteilhafterweise noch weiter verbesserte werden.

Im Rahmen einer zweiten Ausgestaltung dieser Ausführungsform bedeckt das Interdigitalelektrodensystem die Umfangsfläche des Messraums vollständig und überlappend. Mit anderen Worten, im Rahmen des später erläuterten Folientransfer-Herstellungsverfahrens wird eine mit dem Interdigitalelektrodensystem bedruckte Folie derart in den Messraum eingebracht, dass diese die Umfangsfläche des Messraums vollständig bedeckt, wobei der Folienanfangsbereich und der Folienendbereich überlappend angeordnet sind. Dadurch kann vorteilhafterweise ein nahezu vollständig rotationssymmetrischer Aufbau der Messzelle erreicht werden. Um den Bereich unterhalb der Überlappung zu kontaktieren, können die Zuleitungen beispielsweise schräg aus der Überlappung herausgeführt oder der Bereich unter der Überlappung kann durch einen der Kammrücken der Interdigitalelektroden kontaktiert werden.

Im Rahmen einer weiteren, bevorzugten Ausführungsform der vorliegenden Erfindung ist das Interdigitalelektrodensystem, insbesondere nur, auf einer Fläche, insbesondere Großfläche, des Messraums angeordnet. Zum Beispiel kann das Interdigitalelektrodensystem, insbesondere nur, auf einer Fläche, insbesondere Großfläche, eines Messraums mit einem rechteckigen oder einem quasi rechteckigen Querschnitt angeordnet sein. Aufgrund einer, durch die Ausformung der Innengeometrie bedingten, sehr definierten Überströmung des Interdigitalelektrodensystem kann gegenüber herkömmlichen planaren Teilchensensoren eine deutlich vorteilhaftere Überströmung des Interdigitalelektrodensystems und damit eine deutlich verbesserte Messgenauigkeit und Messdynamik erreicht werden.

Im Rahmen einer weiteren, besonders bevorzugten Ausführungsform der vorliegenden Erfindung umfasst der Sensor mindestens ein erstes und ein zweites Interdigitalelektrodensystem. Vorzugsweise ist dabei sowohl das erste als auch das zweite Interdigitalelektrodensystem im Messraum angeordnet. Das erste und zweite Interdigitalelektrodensystem sind dabei vorzugsweise unabhängig voneinander regenerierbar, ansteuerbar und/oder auswertbar. Durch den Einsatz von mindestens zwei Interdigitalelektrodensystemen kann unter anderem vorteilhafterweise ein später erläutertes kontinuierliches Messverfahren durchgeführt werden, in dem ein Interdigitalelektrodensystem misst während das andere Interdigitalelektrodensystem regeneriert, und umgekehrt. Darüber hinaus kann durch den Einsatz von mindestens zwei Interdigitalelektrodensystemen zwischen einem Sammel- und einem Messmodus unterschieden werden.
Im Rahmen einer besonders bevorzugten Ausgestaltung dieser Ausführungsform sind das erste und das zweite Interdigitalelektrodensystem auf gegenüberliegenden Flächen, insbesondere Großflächen, des Messraums, beispielsweise eines Messraums mit einem rechteckigen oder einem quasi rechteckigen Querschnitt, angeordnet. Dies hat den Vorteil, dass ein weiteres, später erläutertes Messverfahren durchgeführt werden kann, welches mit einer besonders vorteilhaften Feldausprägung und einer damit verbundenen hohen Sammelfunktionalität einhergeht.
Im Rahmen einer weiteren, besonders bevorzugten Ausgestaltung dieser Ausführungsform sind das erste und das zweite Interdigitalelektrodensystem unabhängig voneinander beheizbar beziehungsweise regenerierbar. Auf diese Weise können das erste und zweite Interdigitalelektrodensystem unabhängig voneinander regeneriert werden und das später erläuterte kontinuierliche Messverfahren durchgeführt werden. Auf einer Fläche, insbesondere Großfläche, des Messraums, beispielsweise eines Messraums mit einem rechteckigen oder einem quasi rechteckigen Querschnitt, ist das Interdigitalelektrodensystem und im Rahmen einer weiteren, besonders bevorzugten Ausführungsform der vorliegenden Erfindung ist auf einer dieser Fläche gegenüberliegenden Fläche, insbesondere Großfläche, eine Heizvorrichtung angeordnet. Im Rahmen dieser Ausführungsform kann die Regeneration des Interdigitalelektrodensystems durch Strahlungswärme erfolgen. Dadurch wird das Trägerelement vorteilhafterweise kaum aufgeheizt, was eine schnelle Regeneration und eine baldige erneute Messbereitschaft zur Folge hat, eine Abkühlphase verringert werden kann oder sogar entfallen kann. Darüber hinaus kann die Heizvorrichtung im Messbetrieb auf ein Potenzial gelegt werden, welches ein homogenes elektrisches Feld in dem Zwischenraum zwischen der Heizvorrichtung und dem Interdigitalelektrodensystem erzeugt, welches wiederum zu einer verstärkten Anlagerung führt. Zusätzlich kann durch eine geringe Heizleistung während des Messbetriebes ein Temperaturgradient im Messraum erzeugt werden, welcher zu einer verstärkten Teilchenanlagerung auf dem Interdigitalelektrodensystem durch Thermophorese führt und somit die Sensorempfindlichkeit weiter steigert.

Im Rahmen einer weiteren, besonders bevorzugten Ausführungsform der vorliegenden Erfindung sind die Elektrodenarme des Interdigitalelektrodensystems koaxial zur Richtung des Gasstroms und/oder koaxial zur Längsrichtung des Messraums angeordnet.

Im Rahmen einer weiteren, besonders bevorzugten Ausführungsform der vorliegenden Erfindung weist das Trägerelement, insbesondere am dem Gasstrom ausgesetzten Ende und/oder in einem an eine Presspackung anschließenden Bereich, eine im Wesentlichen rotationssymmetrische, insbesondere zylindrische, Außenwandung auf. Dies hat sich für eine einfache und/oder richtungsunabhängige Verbauung und Abdichtung als vorteilhaft erwiesen.

Im Rahmen einer weiteren, besonders bevorzugten Ausführungsform der vorliegenden Erfindung ist das Trägerelement aus mindestens einer ersten und einer zweiten Seitenschale ausgebildet. Unter einer Seitenschale kann ein Bauteil verstanden werden, welches durch Zusammenfügen mit mindestens einem zweiten Bauteil das herzustellende Trägerelement ergibt. Die Trennebene von beispielsweise zwei Seitenschalen muss dabei nicht der der Symmetrieebene des herzustellenden Trägerelements entsprechen, sondern kann auch so angeordnet sein, dass ein Abstandssteg auf einer Seiteschale angeordnet ist, während die andere Seitenschale flach ausgebildet ist. Insbesondere kann es sich bei den Seitenschalen um Halbschalen handeln. Eine Halbschale kann dabei als spezielle Form einer Seitenschale verstanden werden. So kann unter einer Halbschale eine Seitenschalen verstanden werden, welche durch Zusammenfügen mit einer zweiten, entsprechenden Halbschale das herzustellende Trägerelement ergibt, wobei die Trennebene der beiden Halbschalen der Symmetrieebene des herzustellenden Trägerelements entspricht. Durch den Einsatz von Seitenschalen kann das Trägerelement relativ einfach und kostengünstig, beispielsweise durch Presstechnik, aufgebaut und das oder die Interdigitalelektrodensysteme, eine Heizvorrichtung und/oder eine Temperaturmessvorrichtung, beispielsweise durch eine Drucktechnik, auf die Seitenschalen appliziert werden, bevor die Seitenschalen in einem Laminier- oder Sinterprozesse zusammen gefügt werden. Vorzugsweise weisen die Seitenschalen Verzahnungen auf. Auf diese Weise können die beiden Seitenschalen einfacher in einer definierten Lage zueinander angeordnet und fixiert werden.

Im Rahmen einer Ausgestaltung dieser Ausführungsform ist das Trägerelement aus einer ersten und einer zweiten, insbesondere einseitig planen, Seitenschale und einer dazwischen angeordneten Zwischenschicht ausgebildet. Diese Ausgestaltung hat den Vorteil, dass die beiden Seitenteile auf ihrer Innenseite vollständig plan sind, was das Aufbringen des Interdigitalelektrodensystems und gegebenenfalls weiterer Bauteile vereinfacht. Darüber hinaus ermöglicht dies, insbesondere bei durch Gießtechnik hergestellten Seitenteilen, eine Mehrfachnutzung der Gießform zur Herstellung unterschiedlicher Teilchensensoren durch unterschiedliche auf den Seitenschalen applizierte Bauteile. Die Zwischenschicht kann derart, beispielsweise in Form eines offenen Rahmens, ausgestaltet sein, dass diese den Messraum, die Gaszutrittsöffnung und die Gasauslassöffnung ausbildet und deren Größe und Höhe definiert. Die Zwischenschicht kann beispielsweise eine Folie aus dem gleichen Material wie die Seitenteile sein. Bei Teilchensensoren, die auf einer Fläche des Messraums ein Interdigitalelektrodensystem und auf der gegenüberliegenden Fläche eine Heizvorrichtung aufweisen, ist die Zwischenschicht vorzugsweise aus einem thermisch isolierenden Material, beispielsweise porösem Zirkoniumoxid, ausgebildet. Auf diese Weise kann die Wärmeleitung von der Heizvorrichtung zum Interdigitalelektrodensystem über die Seitenwände vorteilhafterweise verringert oder sogar vermieden werden, so dass der Hauptbeitrag der Wärmeübertrag auf Wärmestrahlung beruht.

Im Rahmen einer weiteren, besonders bevorzugten Ausführungsform der vorliegenden Erfindung weist das Trägerelement eine die Außenwandung des Trägerelements umfänglich umlaufende, beispielsweise konisch ausgeführte, Auskragung auf. Diese Auskragung kann, beispielsweise wie in der Zündkerzentechnik, direkt in einem Sechskant verstemmt werden. Dadurch kann eine bereits weitgehend gasdichte Befestigung des Teilchensensors in einem Gehäuse erreicht werden. Dies hat den Vorteil, dass auf eine sonst übliche Dichtpackung zur Befestigung und Halterung eines stabförmigen Sensorelements in einem Sensorgehäuse gegebenenfalls verzichtet werden kann.

Im Rahmen einer weiteren, besonders bevorzugten Ausführungsform der vorliegenden Erfindung weist der Teilchensensor einen Thermoschockschutzmantel auf. Beispielsweise kann der Thermoschockschutzmantel aus einem porösen keramischen Material ausgebildet sein. Das Trägerelement kann insbesondere von dem Thermoschockschutzmantel umgeben sein. Vorzugsweise sind die umfängliche Außenwandung und/oder die stirnseitigen Außenflächen des Trägerelementes von einem Thermoschockschutzmantel umgeben. Auf diese Weise kann der erfindungsgemäße Teilchensensor vorteilhafterweise gegen Thermoschock durch im Gasstrom mitgeführte Wassertropfen geschützt werden. Im Rahmen einer Ausgestaltung dieser Ausführungsform sind auch die zu den Stirnseiten des Trägerelementes benachbarten Innenwandungsbereiche von dem Thermoschockschutzmantel umgeben. Dies hat den Vorteil, dass die Stirnbereiche des Trägerelementes weitgehend gegen Wasserschlag geschützt werden.

Im Rahmen einer weiteren Ausführungsform der vorliegenden Erfindung weist der Teilchensensor ein, insbesondere äußeres Schutzrohr, in dem das Trägerelement angeordnet ist, auf. Um das Trägerelement zuverlässig gegen mechanische Beschädigungen zu schützen, können dabei einige Bereiche des Schutzrohrs als mechanischer Schutz nasenförmig bis über die Stirnseiten des Trägerelementes hinausgezogen sein.

Im Rahmen einer weiteren Ausführungsform der vorliegenden Erfindung weist der Teilchensensor eine Referenzgaszudosierungsvorrichtung zum Verdünnen des Gasstroms mit einem Referenzgas auf. Das Zudosieren des Referenzgases kann dabei beispielsweise auf der Basis des im Betrieb des Teilchensensors vorliegenden Sogs aus der Umgebungsluft des Abgasstrangs realisiert werden.

Im Rahmen einer weiteren Ausführungsform der vorliegenden Erfindung weist der Teilchensensor eine Dichtpackung auf. Auf diese Weise kann der Kontaktbereich des Teilchensensors gegen Gasstrombestandteile geschützt werden. Durch eine poröse Ausgestaltung der Dichtepackung kann zudem gewährleistet werden, dass Referenzgas in den Teilchensensor einströmen kann, wohingegen Gasstrombestanteile herausfiltert werden.

Um den Kontaktbereich des Teilchensensors möglichst frei gestalten zu können, ist im Rahmen einer weiteren Ausführungsform der vorliegenden Erfindung die Gasaustrittsöffnung und/oder der daran angrenzende Bereich des Messraums größer, insbesondere radial aufgeweitet, ausgestaltet. Im Rahmen einer anderen Ausführungsform der vorliegenden Erfindung weist der Teilchensensor hingegen eine oder mehrere Durchkontaktierungen, beispielsweise durch die Seitenteile, auf, um das Interdigitalelektrodensystem und die übrigen im Trägerelement angeordneten Bauteile, wie Heiz- und/oder Temperaturmessvorrichtung, zu kontaktieren.

Ein weiterer Gegenstand der vorliegenden Erfindung ist ein Verfahren zur, insbesondere kontinuierlichen, Detektion von Teilchen in einem Gasstrom mit einem erfindungsgemäßen Teilchensensor, welcher mindestens ein erstes und ein zweites Interdigitalelektrodensystem umfasst, in dem
- in einem ersten Verfahrensschritt an das erste Interdigitalelektrodensystem eine Messspannung angelegt und die Teilchenmenge auf der Basis einer Spannungs-, Strom- und/oder Widerstandsänderung an dem ersten Interdigitalelektrodensystem bestimmt wird, und
- in einem zweiten Verfahrensschritt an das zweite Interdigitalelektrodensystem eine Messspannung angelegt und die Teilchenmenge auf der Basis einer Spannungs-, Strom- und/oder Widerstandsänderung an dem zweiten Interdigitalelektrodensystem bestimmt wird, und
- die Verfahrensschritte alternierend wiederholt werden.

Insbesondre kann während des ersten Verfahrensschritts das zweite Interdigitalelektrodensystem regeneriert werden, oder an das zweite Interdigitalelektrodensystem ebenfalls eine Messspannung angelegt und die Teilchenmenge auf der Basis einer Spannungs-, Strom- und/oder Widerstandsänderung an dem zweiten Interdigitalelektrodensystem bestimmt werden, oder an das zweite Interdigitalelektrodensystem keine Messspannung angelegt werden; und/oder während des zweiten Verfahrensschritts das erste Interdigitalelektrodensystem regeneriert werden, oder an das erste Interdigitalelektrodensystem ebenfalls eine Messspannung angelegt und die Teilchenmenge auf der Basis einer Spannungs-, Strom- und/oder Widerstandsänderung an dem ersten Interdigitalelektrodensystem bestimmt werden, oder an das erste Interdigitalelektrodensystem keine Messspannung angelegt werden.

Das zweite Interdigitalelektrodensystem kann dabei während des ersten Verfahrensschritts regenerieren und messen und gegebenenfalls weitere Funktionen erfüllen und/oder das erste Interdigitalelektrodensystem kann während des zweiten Verfahrensschritts regenerieren und messen und gegebenenfalls weitere Funktionen erfüllen. Auf diese Weise können die Messphasen des ersten und zweiten Interdigitalelektrodensystems vorteilhafterweise zeitlich überlappen.

Ein weiterer Gegenstand der vorliegenden Erfindung ist ein Verfahren zur Detektion von Teilchen in einem Gasstrom mit einem erfindungsgemäßen Teilchensensor, welcher mindestens ein erstes und ein zweites Interdigitalelektrodensystem umfasst, wobei das erste und das zweite Interdigitalelektrodensystem auf gegenüberliegenden Flächen des Messraums angeordnet sind, in dem
- in einer Sammelphase an die Interdigitalelektroden des ersten Interdigitalelektrodensystems bezüglich den Interdigitalelektroden des zweiten Interdigitalelektrodensystem eine Potentialdifferenz angelegt wird, um ein Teilchen sammelndes, elektrisches Feld zwischen dem ersten und dem zweiten Interdigitalelektrodensystem zu erzeugen, und
- in einer Messphase zumindest an die Interdigitalelektroden eines Interdigitalelektrodensystems eine Potentialdifferenz angelegt wird, um die Teilchenmenge auf der Basis einer, insbesondere aus Teilchenanlagerung resultierenden, Spannungs-, Strom- und/oder Widerstandsänderung an dem Interdigitalelektrodensystem zu bestimmen; und
- die Phasen alternierend wiederholt werden.

Ein weiterer Gegenstand der vorliegenden Erfindung ist ein Verfahren zur Detektion von Teilchen in einem Gasstrom mit einem erfindungsgemäßen Teilchensensor, welcher mindestens ein erstes und ein zweites Interdigitalelektrodensystem umfasst, wobei das erste und das zweite Interdigitalelektrodensystem auf gegenüberliegenden Flächen des Messraums angeordnet sind, in dem
- eine Potentialdifferenz sowohl zwischen den Interdigitalelektroden jeweils eines Interdigitalelektrodensystems als auch zwischen den Interdigitalelektroden von gegenüberliegenden Interdigitalelektrodensystemen angelegt wird, um sowohl ein Teilchen sammelndes, elektrisches Feld jeweils zwischen den Interdigitalelektroden eines Interdigitalelektrodensystems als auch ein, insbesondere im Wesentlichen quer zum Gasstrom ausgerichtetes, Teilchen sammelndes, elektrisches Feld zwischen dem ersten und dem zweiten Interdigitalelektrodensystem, zu erzeugen.

Mit anderen Worten, an die beiden Interdigitalelektrodensysteme wird eine Potenzialdifferenz angelegt, damit zwischen den beiden Interdigitalelektrodensystemen ein homogenes, im Wesentlichen quer zur Gasströmungsrichtung ausgebildetes, elektrisches Feld entsteht, wobei gleichzeitig jeweils an die Interdigitalelektroden eines Interdigitalelektrodensystems eine Potenzialdifferenz angelegt wird, damit sich Teilchenpfade zwischen den Elektrodenarmen der unterschiedlichen Interdigitalelektroden eines Interdigitalelektrodensystems ausbilden, welche kontinuierlich ausgewertet werden können. Beispielsweise können die beiden Interdigitalelektroden des ersten Interdigitalelektrodensystems auf 0 V und +20 V liegen, während die beiden Interdigitalelektroden des zweiten Interdigitalelektrodensystems auf +60 V und +80 V liegen. Alternativ können die beiden Interdigitalelektroden des ersten Interdigitalelektrodensystems zum Beispiel auch auf-40 V und -20 V liegen, während die beiden Interdigitalelektroden des zweiten Interdigitalelektrodensystems auf +20 V und +40 V liegen. Andere Spannungsniveaus sind ebenfalls denkbar.

Ein derartiger Teilchensensor und ein derartiges erfindungsgemäßes Verfahren haben den Vorteil, dass die Ausrichtung der Elektrodenarme relativ zur Strömungsrichtung des Gasstroms nur geringen oder keinen Einfluss auf die Teilchenanlagerung hat. Vorteilhaft ist dennoch eine axiale Ausrichtung.

Ein weiterer Gegenstand der vorliegenden Erfindung ist ein Verfahren zur Herstellung eines erfindungsgemäßen Teilchensensors, in dem
- eine Mehrschichtfolie, welche mindestens ein Interdigitalelektrodensystem und eine Heizvorrichtung und/oder eine Temperaturvorrichtung und/oder eine oder mehrere Durchkontaktierungen und/oder eine oder mehrere Isolationsschichten, insbesondere Isolationszwischenschichten, umfasst, durch ein Druck-, Laminier- und/oder Sprüh-Verfahren hergestellt wird, und
- die Mehrschichtfolie auf ein Trägerelement transferiert, insbesondere in ein röhrenähnliches Trägerelement eingeschoben, wird.

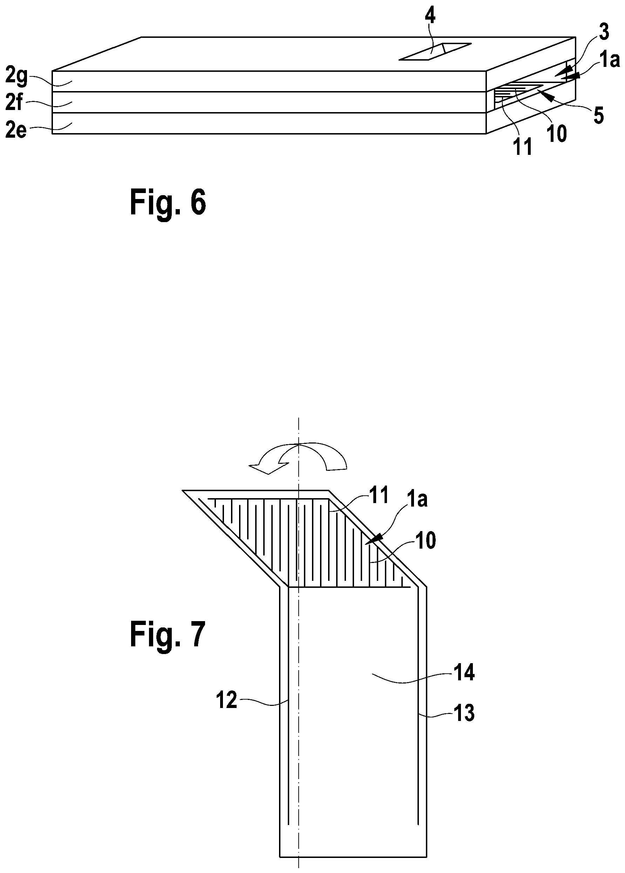

Bei der Mehrschichtfolie kann es sich beispielsweise um eine in Figur 7 gezeigte Mehrschichtfolie handeln. Vorzugsweise weist die Mehrschichtfolie einen parallelogrammförmig ausgestalteten Bereich auf, auf dem das Interdigitalelektrodensystem derart angeordnet ist, dass die Elektrodenarme der Interdigitalelektroden parallel zur Parallelogrammhöhe und die Kammrücken der Interdigitalelektroden parallel zu den Kanten des Parallelogramms verlaufen, welche bezüglich der Parallelogrammhöhe senkrecht angeordnet sind. Die Heizvorrichtung und/oder die Temperaturmessvorrichtung können dabei durch Isolationszwischenschichten beabstandet unter dem Interdigitalelektrodensystem angeordnet sein. Indem die Mehrschichtfolie umfänglich auf ein stabförmiges Trägerelement aufgebracht wird, kann auch ein Teilchensensor hergestellt werden, welcher ein stabförmiges Trägerelement umfasst, auf dessen Umfangsoberfläche ein Interdigitalelektrodensystem angeordnet ist.

Im Rahmen einer Ausführungsform dieses Herstellungsverfahrens erfolgt der Transfer der Mehrschichtfolie auf ein ungesintertes Trägerelement, wobei das Trägerelement und die Mehrschichtfolie anschließend durch ein Sinterverfahren miteinander verbunden werden. Insbesondere entsteht dabei ein monolithischer Verbund. Alternativ dazu können das Trägerelement und die Mehrschichtfolie auch durch ein Laminierungsverfahren miteinander verbunden und gegebenenfalls anschließend versintert werden. Das Auflaminieren kann beispielsweise mittels eines Ballons erfolgen, welcher im Inneren des röhrenähnlichen Trägerelements aufgepumpt wird, und die Mehrschichtfolie gegen die Innenwandung des röhrenähnlichen Trägerelements drückt.

Ein weiterer Gegenstand der vorliegenden Erfindung ist ein weiteres Verfahren zur Herstellung eines erfindungsgemäßen Teilchensensors, in dem ein Trägerelement mit mindestens einem Interdigitalelektrodensystem und/oder einer Heizvorrichtung und/oder einer Temperaturvorrichtung und/oder einer oder mehreren Durchkontaktierungen und/oder einer oder mehreren Isolationsschichten, insbesondere Isolationszwischenschichten, bedruckt wird.

Ein weiterer Gegenstand der vorliegenden Erfindung ist ein weiteres Verfahren zur Herstellung eines erfindungsgemäßen Teilchensensors, in dem
- ein Trägerelement mit mindestens einer metallhaltigen, insbesondere platinhaltigen, Schicht flächig bedruckt, und
- aus der metallhaltigen Schicht durch ein Laserstrahlstrukturierungs- und/oder Photolithografie-Verfahren das Interdigitalelektrodensystem ausgebildet wird.

Diese Verfahren haben den Vorteil, dass im Vergleich zu siebdrucktechnischen Verfahren das Linien/Linienabstands-Verhältnis freier wählbar ist. Insbesondere feinere Strukturen sind realisierbar. Photolitographische Verfahren sind insbesondere im Zusammenhang mit UV-härtenden Materialsystemen umsetzbar.

Ein weiterer Gegenstand der vorliegenden Erfindung ist ein weiteres Verfahren zur Herstellung eines erfindungsgemäßen Teilchensensors, in dem
- eine Folie, welche einen Folienbereich und einen dazu benachbarten Mehrschichtbereich aufweist, der mindestens ein Interdigitalelektrodensystem und eine Heizvorrichtung und/oder eine Temperaturvorrichtung und/oder eine oder mehrere Durchkontaktierungen und/oder eine oder mehrere Isolationsschichten, insbesondere Isolationszwischenschichten, umfasst, durch ein Druck-, Laminier- und/oder Sprüh-Verfahren hergestellt wird,
- die Folie in der Art um einen Kern gewickelt wird, dass das Interdigitalelektrodensystem des Mehrschichtbereichs auf der Innenseite des Wickels angeordnet ist und der Folienbereich durch eine oder mehrere Umwicklungen das Trägerelement ausbildet,
- das gewickelte Folienelement, beispielsweise durch isostatisches Pressen, laminiert wird,
- der Kern entfernt wird, und
- das laminierte Folienelement gesintert wird.

Das Entfernen des Kerns kann bei einem so genannten verlorenen Kern während des Sinterns erfolgen.

Ein weiterer Gegenstand der vorliegenden Erfindung ist ein weiteres Verfahren zur Herstellung eines erfindungsgemäßen Teilchensensors, in dem
- mindestens eine Mehrschichtfolie, welche mindestens ein Interdigitalelektrodensystem und eine Heizvorrichtung und/oder eine Temperaturvorrichtung und/oder eine oder mehrere Durchkontaktierungen und/oder eine oder mehrere Isolationsschichten, insbesondere Isolationszwischenschichten, umfasst, durch ein Druck-, Laminier- und/oder Sprüh-Verfahren hergestellt wird,
- mindestens eine Mehrschichtfolie in der Art auf einem Kern aufgebracht wird, dass das Interdigitalelektrodensystem auf der dem Kern zugewandten Seite angeordnet ist,
- die Mehrschichtfolie/n in einem Keramikspritzguss-Prozess (CIM-Prozess, "Ceramic Injection Molding") mit einer keramischen Masse umspritzt werden, und
- der Kern entfernt wird.

Durch dieses erfindungsgemäße Herstellungsverfahren können vorteilhafterweise auch hochkomplexe Geometrien realisiert werden. Insbesondere ist es möglich, beispielsweise den Bereich des Messraums mit reduzierten Wandstärken zu umspritzen, während die anderen Bereiche des Trägerelementes mit größeren Wandstärken und damit stabiler ausgeführt werden. Beispielsweise können durch diese Ausführungsform des Verfahrens Wandstärken im Bereich des Messraums von ≥ 50 µm bis ≤ 1000 µm, insbesondere von ≥ 100 µm bis ≤ 500 µm, realisiert werden. Durch derart geringe Wandstärken wird vorteilhafterweise eine große thermische Dynamik ermöglicht und gleichzeitig der Heizleistungsbedarf reduziert. Zur Herstellung eines Teilchensensors mit zwei gegenüberliegenden Interdigitalelektrodensystemen können beispielsweise zwei Mehrschichtfolien auf gegenüberliegende Flächen eines Kerns mit rechteckiger Querschnittfläche aufgebracht und anschließend umspritzt werden. Dies hat Vorteile bei sehr kleinen Kantenradien am Kern.

Ein weiterer Gegenstand der vorliegenden Erfindung ist ein weiteres Verfahren zur Herstellung eines erfindungsgemäßen Teilchensensors, in dem
- zwei Seitenschalen, beispielsweise durch ein Press- oder Guß-Verfahren, hergestellt werden,
- mindestens ein Interdigitalelektrodensystem, beispielsweise durch Druck-, Laminier- und/oder Sprüh-Verfahren, auf eine im Endzustand innenliegende Fläche einer Seitenschale aufgebracht wird, und
- die Seitenschalen, beispielsweise durch ein Keramikspritzguss-, Laminier-Sinter- und/oder Laserlöt-Verfahren, insbesondere stoffschlüssig, zusammengefügt werden.

Dieses erfindungsgemäße Herstellungsverfahren hat den Vorteil einer großen Gestaltungsfreiheit der Innengeometrie des Trägerelements.

Im Rahmen einer Ausführungsform dieses Herstellungsverfahrens handelt es sich bei den Seitenschalen um Halbschalen. Dabei werden unter Halbschalen zwei Seitenschalen verstanden, deren Trennebene der Symmetrieebene des herzustellenden Trägerelements entspricht.

Im Rahmen einer weiteren Ausführungsform dieses Herstellungsverfahrens wird beim Sinter-Verfahren ein Glaslot verwendet, welches während des Sinterprozesses schmilzt und zu einem stoffschlüssigen Verbund führt.

Im Rahmen einer weiteren Ausführungsform dieses Herstellungsverfahrens werden fertig gesinterte Sensorbauteile, insbesondere durch Ofen- und/oder Laserstrahlverfahren, mittels eines Glaslots verbunden.

Im Rahmen einer weiteren Ausführungsform dieses Herstellungsverfahrens wird zwischen den Seitenschalen eine Zwischenschicht eingefügt. Dies hat den Vorteil, dass die Innenseiten der Seitenteile planar ausgestaltet sein können, wodurch die Applikation des Interdigitalelektrodensystems vereinfacht werden kann.

Im Rahmen einer weiteren Ausführungsform dieses Herstellungsverfahrens ist die Zwischenschicht aus einem laminierbaren Material oder einem während eines Sinterprozess schmelzbarem Material ausgebildet. Dies hat den Vorteil, dass die Seitenteile und die Zwischenschicht auf einfache Weise durch ein Laminier- oder Sinterverfahren zusammengefügt werden können.

### Zeichnungen

Weitere Vorteile und vorteilhafte Ausgestaltungen des erfindungsgemäßen Gegenstandes werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen:
- Fig. 1: eine schematische, perspektivische Ansicht einer ersten Ausführungsform eines erfindungsgemäßen Teilchensensors;
- Fig. 2: eine schematische, perspektivische Ansicht einer zweiten Ausführungsform eines erfindungsgemäßen Teilchensensors;
- Fig. 3: eine schematische, perspektivische Ansicht einer Halbschale zur Herstellung des, in Fig. 2 gezeigten, erfindungsgemäßen Teilchensensors;
- Fig. 4: eine schematische, perspektivische Ansicht von zwei Seitenschalen und einer Zwischenschicht zur Herstellung des, in Fig. 2 gezeigten, erfindungsgemäßen Teilchensensors;
- Fig. 5: einen schematischen Querschnitt durch den in Fig. 2 gezeigten erfindungsgemäßen Teilchensensor, welcher in einem äußeren Schutzrohr angeordnet und in einem Gehäuse befestigt ist;
- Fig. 6: eine schematische, perspektivische Ansicht einer dritten Ausführungsform eines erfindungsgemäßen Teilchensensors; und
- Fig. 7: eine schematische Draufsicht auf eine Folie, welche einen Folienbereich und einen dazu benachbarten Mehrschichtbereich mit Interdigitalelektrodensystem aufweist.

Figur 1 zeigt eine schematische, perspektivische Ansicht einer ersten Ausführungsform eines erfindungsgemäßen Teilchensensors. Im Rahmen dieser Ausführungsform ist das Trägerelement **2** des Teilchensensors röhrenähnlich, insbesondere rotationssymmetrisch und röhrenförmig, ausgestaltet. Der in der perspektivischen Ansicht nicht einsehbare Messraum **3,** in welchem ein ebenfalls nicht sichtbares Interdigitalelektrodensystem **1a, 1b** angeordnet ist, ist im Rahmen dieser Ausführungsform zylindrisch ausgestaltet und weist eine kreisförmige Querschnittsfläche auf. Im Rahmen dieser Ausführungsform umfasst das Trägerelement **2** vier, seitlich in dem Trägerelement **2** ausgebildete Gaszutrittsöffnungen **4,** von denen zwei in Figur 1 sichtbar sind. Figur 1 zeigt, dass der Teilchensensor im Rahmen dieser Ausführungsform eine Gasauslassöffnung **5** umfasst, welche einen, dem Messraum **3** entsprechenden, kreisförmigen Querschnitt aufweist. Darüber hinaus zeigt Figur 1, dass das Trägerelement eine zylindrische Außenwandung aufweist.

Figur 2 zeigt eine schematische, perspektivische Ansicht einer zweiten Ausführungsform eines erfindungsgemäßen Teilchensensors. Im Rahmen dieser Ausführungsform ist das Trägerelement **2** röhrenähnlich und im Wesentlichen rotationssymmetrisch ausgestaltet. Fig. 2 zeigt, dass unter "im Wesentlichen rotationssymmetrisch" im Rahmen der vorliegenden Erfindung auch Körper verstanden werden, die eine partielle Abweichungen von einer Rotationssymmetrie, beispielsweise im Bereich des Messraums **3** und der Gasauslassöffnung **5,** aufweisen. Die zweite Ausführungsform unterscheidet sich von der ersten Ausführungsform weiterhin dadurch, dass der Messraum quasi quarderförmig ausgestaltet ist und eine quasi rechteckige Querschnittsfläche aufweist. Unter "quasi quarderförmig" beziehungsweise "quasi rechteckig" wird dabei verstanden, dass der Messraum beziehungsweise die Querschnittsfläche durch abgerundete Kanten beziehungsweise Ecken von der idealen Form abweichen. Darüber hinaus unterscheidet sich die zweite Ausführungsform von der ersten Ausführungsform dadurch, dass die Gasauslassöffnung **5,** ebenso wie der Messraum **3,** eine quasi rechteckige Querschnittsfläche aufweist. Ferner unterscheidet sich die zweite Ausführungsform dadurch von der ersten Ausführungsform, dass das Trägerelement **2** im Bereich der Messzelle **3** eine verringerte Wandstärke und damit vorteilhafterweise eine verringerte thermische Masse aufweist. Darüber hinaus zeigt Figur 2, dass das Trägerelement im Rahmen dieser Ausführungsform eine im Wesentlichen rotationssymmetrische Außenwandung aufweist. In dem, dem Gasstrom ausgesetzten Ende, insbesondere Staupunktende, (oben links) und in dem an ein Gehäuse und/oder eine Presspackung anschließenden Bereich (unten links) weist das Trägerelement **2** eine zylindrische Außenwandung auf.

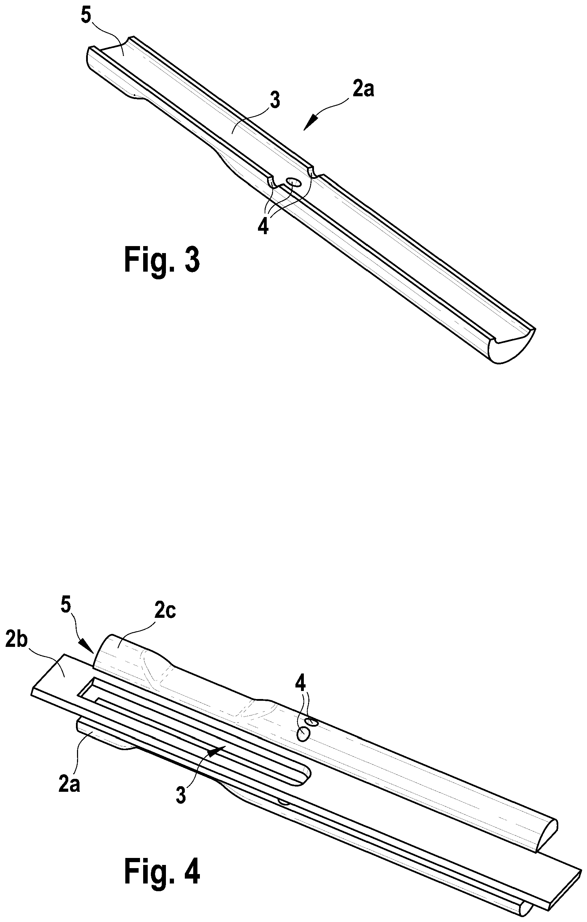

Figur 3 zeigt eine schematische, perspektivische Ansicht einer Halbschale **2a** zur Herstellung des, in Fig. 2 gezeigten, erfindungsgemäßen Teilchensensors vor dem Aufbringen eines Interdigitalelektrodensystems. Figur 3 veranschaulicht, dass unter einer Halbschale eine Seitenschalen verstanden werden kann, welche durch Zusammenfügen mit einer zweiten, entsprechenden Halbschale **2a** das herzustellende Trägerelement **2** ergibt, wobei die Trennebene der beiden Halbschalen **2a** der Symmetrieebene des herzustellenden Trägerelements **2** entspricht. Figur 3 zeigt, dass die Halbschale **2a** eine Aussparung aufweist, welche derart ausgestaltet ist, dass durch Zusammenfügen von zwei derartigen Halbschalen **2a** ein quasi quarderförmiger Messraum **3** mit quasi rechteckiger Querschnittsfläche ausgebildet wird. In den Aussparungen von zwei derartigen Halbschalen **2a** kann beispielsweise insgesamt ein Interdigitalelektrodensystem **1a, 1b,** oder ein Interdigitalelektrodensystem **1a, 1b** in der einen und eine Heizvorrichtung in der anderen Aussparung, oder jeweils ein Interdigitalelektrodensystem **1a, 1b** angeordnet werden. Insofern ein Interdigitalelektrodensystem **1a,** und eine Heizvorrichtung oder zwei Interdigitalelektrodensysteme **1 a, 1 b** jeweils in den Aussparungen angeordnet werden, so werden diese vorzugsweise auf gegenüberliegenden Großflächen der Innenkontur aufgebracht. Bei zwei gegenüberliegend angeordneten Interdigitalelektrodensystemen **1a, 1b** kann in räumlicher Nähe zu diesen jeweils eine Heizvorrichtung und/oder eine Temperaturmessvorrichtung angeordnet werden. Dies kann beispielsweise durch eine Mehrschichtanordnung realisiert werden, in der das Interdigitalelektrodensystem in der obersten Schicht und die Heizvorrichtung und/oder die Temperaturmessvorrichtung in darunter liegenden Schichten durch Isolationsschichten voneinander beabstandet angeordnet sind.

Figur 4 zeigt eine schematische, perspektivische Ansicht von zwei Seitenschalen **2a, 2c** mit planer Innenfläche und einer Zwischenschicht **2b** zur Herstellung des, in Fig. 2 gezeigten, erfindungsgemäßen Teilchensensors. Figur 4 zeigt, dass die Zwischenschicht **2b** eine Aussparung aufweist, welche derart ausgestaltet ist, dass diese im Zusammengefügten Zustand den Messraum **3** ausbildet und dessen Größe und Höhe definiert. Gegenüber der Verwendung von in Figur 3 gezeigten Halbschalen, haben die in Figur 4 gezeigten Seitenschalen **2a, 2c** den Vorteil, dass diese planare Innenseiten aufweisen, welche eine einfacher Applikation von Interdigitalelektrodensystemen und anderen Bauteilen, wie Heizvorrichtung und/oder Temperaturmessvorrichtung, ermöglichen. Figur 4 zeigt weiterhin, dass die Zwischenschicht **2b** eine größere Fläche aufweisen kann als die Innenflächen der Seitenschalen **2a, 2c.** Daraus resultierende Überstände können nach dem Zusammenfügen entfernt werden.

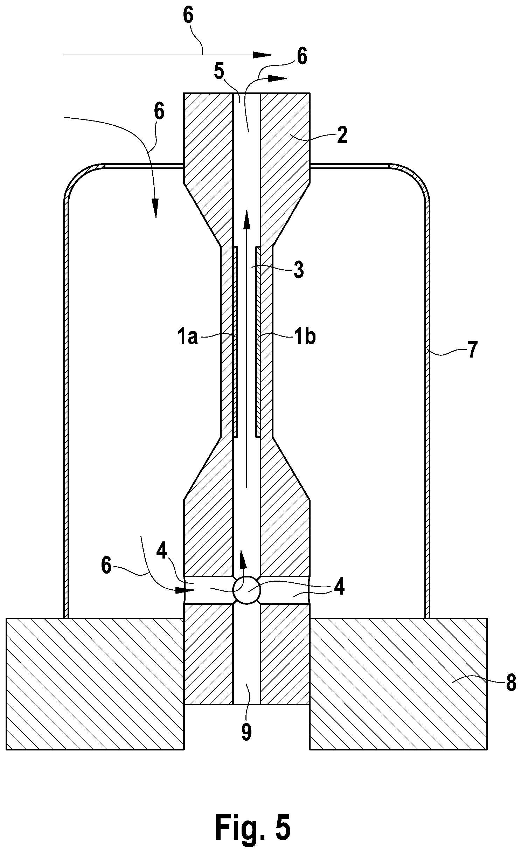

Figur 5 zeigt einen schematischen Querschnitt durch den in Fig. 2 gezeigten erfindungsgemäßen Teilchensensor, welcher in einem äußeren Schutzrohr **7** angeordnet und in einem Gehäuse **8** befestigt ist. Figur 5 zeigt, dass der Teilchensensor im Rahmen dieser Ausführungsform zwei auf gegenüberliegenden Flächen des Messraums **3** angeordnete Interdigitalelektrodensystem **1a, 1b** aufweist. Figur 5 veranschaulicht, dass der zu bestimmende Gasstrom **6** bei einem derartigen Aufbau teilweise in den Raum zwischen Innenwandung des äußeren Schutzrohrs **7** und Außenwandung des Trägerelementes **2** abgelenkt wird und durch die im unteren Bereich des Trägerelementes **2** ausgebildeten Gaszutrittsöffnungen **4** in den Messraum **3** eindringt, wo er die Teilchen detektierenden Interdigitalelektrodensysteme **1a, 1b** überströmt und anschließend den Messraum **3** durch die Gasauslassöffnung **5** verlässt. Hierbei werden die Interdigitalelektrodensysteme **1a, 1b** gerichtet überströmt. Dabei übernimmt das Trägerelement **2** vorteilhafterweise die Funktionalität eines inneren Schutzrohres, wobei der Staupunkt, welcher zur Umlenkung des Gasstroms in den Bereich zwischen äußerem Schutzrohr und Trägerelementaußenwandung führt, durch das obere, aus dem äußeren Schutzrohr **7** herausragenden Endes des Trägerelementes **2** gebildet wird. Darüber hinaus illustriert Figur 5, dass zur Verdünnung des Gasstroms **6** ein Referenzgas durch den röhrenähnlichen Messgasraumfortsatz **9** auf einfache Weise zugeführt werden kann.

Figur 6 zeigt eine schematische, perspektivische Ansicht einer dritten Ausführungsform eines erfindungsgemäßen Teilchensensors. Im Rahmen dieser Ausführungsform ist das Trägerelement **2** blockähnlich ausgestaltet und basiert auf einem, beispielsweise durch ein Laminierverfahren herstellbaren, Schichtaufbau. Figur 6 zeigt, dass der Schichtaufbau mindestens eine erste **2e,** zweite **2f** und dritte **2g** Trägerschicht umfasst. Dabei ist die zweite Trägerschicht **2f** auf der ersten Trägerschicht **2e** und die dritte Trägerschicht **2g** auf der zweiten Trägerschicht **2f** angeordnet. Die zweiten Trägerschicht **2f** weist dabei eine Aussparung zur Ausbildung des Messraums **3** und der Gasauslassöffnung **5** auf und die dritten Trägerschicht **2g** weist eine Aussparung zur Ausbildung der Gaseintrittsöffnung **4** auf. Figur 6 zeigt darüber hinaus, dass in dem Messraum **3** ein Interdigitalelektrodensystem **1a** aus zwei kammartig ineinander greifenden Interdigitalelektroden **10, 11** angeordnet ist. Ein derartiger Aufbau ist insbesondere bei einer Staupunktanströmung vorteilhaft, bei der das Abgas direkt in die Gaszutrittsöffnung **4** und damit das Interdigitalelektrodensystem **1a** geleitet wird.

Figur 7 zeigt eine schematische Draufsicht auf eine Mehrschichtfolie, welche eine Trägerfolie **14,** ein Interdigitalelektrodensystem **1a** aus zwei kammartig ineinander greifenden Interdigitalelektroden **10, 11** und die Interdigitalelektroden **10, 11** kontaktierende Zuleitungen **12, 13** umfasst. Figur 7 zeigt, dass die Mehrschichtfolie einen parallelogrammförmig ausgestalteten Bereich aufweist, auf dem das Interdigitalelektrodensystem **1a** derart angeordnet ist, dass die Elektrodenarme der Interdigitalelektroden **10, 11** parallel zur Parallelogrammhöhe und die Kammrücken der Interdigitalelektroden **10, 11** parallel zu den Kanten des Parallelogramms verlaufen, welche bezüglich der Parallelogrammhöhe senkrecht angeordnet sind. Indem eine derartige Folie um die eingezeichnete Achse gebogen wird, kann ein Interdigitalelektrodensystem **1a** ausgebildet werden, welches in einem Messraum **3** einen schmalen Streifen unbedeckt lässt, welcher die Umfangsfläche eines Messraums **3** spiralförmig umläuft. Durch den Einsatz einer derartigen Folie können vorteilhafterweise auch Teilchensensoren hergestellt werden, welche ein stabförmiges Trägerelement auf weisen, auf dessen Umfangsfläche ein Interdigitalelektrodensystem angeordnet ist. Neben den in Figur 7 dargestellten Einheiten kann die Mehrschichtfolie weiterhin eine Heizvorrichtung und/oder eine Temperaturmessvorrichtung aufweisen. Diese werden vorzugsweise, durch Isolationsschichten voneinander beabstandet, unter dem Interdigitalelektrodensystem **1a** angeordnet.

## Patentansprüche

1. Teilchensensor zur Detektion von Teilchen in einem Gasstrom, umfassend
- mindestens ein Interdigitalelektrodensystem (1a, 1b) aus mindestens zwei kammartig ineinandergreifenden Interdigitalelektroden, und
- ein Trägerelement (2),
wobei in dem Trägerelement (2) ein Messraum (3) mit mindestens einer Gaszutrittsöffnung (4) und mindestens einer Gasauslassöffnung (5) ausgebildet ist, wobei mindestens ein Interdigitalelektrodensystem (1) auf einer Fläche des Messraums (3) angeordnet ist, **dadurch gekennzeichnet, dass** das Trägerelement (2) eine im Wesentlichen rotationssymmetrische Außenwandung aufweist.

2. Teilchensensor nach Anspruch 1, **dadurch gekennzeichnet, dass** das Trägerelement (2) im Bereich des Messraums eine verringerte Wandstärke aufweist.

3. Teilchensensor nach Anspruch 1 oder 2, **dadurch gekennzeichnet, dass** das Trägerelement (2) aus mindestens einer ersten (2a) und einer zweiten (2c) Seitenschale ausgebildet ist.

4. Teilchensensor nach einem der Ansprüche 1 bis 3, **dadurch gekennzeichnet, dass** das Trägerelement (2) aus einer ersten (2a) und einer zweiten (2c) Seitenschale und einer dazwischen angeordneten Zwischenschicht (2b) ausgebildet ist.

5. Teilchensensor nach einem der Ansprüche 1 bis 4, **dadurch gekennzeichnet, dass** die Zwischenschicht (2b) aus einem thermisch isolierenden Material ausgebildet ist.

6. Teilchensensor nach einem der Ansprüche 1 bis 5, **dadurch gekennzeichnet, dass** das Trägerelement (2) eine die Außenwandung des Trägerelements (2) umfänglich umlaufende Auskragung aufweist.

7. Teilchensensor nach einem der Ansprüche 1 bis 6, **dadurch gekennzeichnet, dass** das Interdigitalelektrodensystem (1 a) im Wesentlichen die gesamte Umfangsfläche des Messraums (3) bedeckt.

8. Teilchensensor nach einem der Ansprüche 1 bis 7, **dadurch gekennzeichnet, dass** auf einer Fläche des Messraums (3) das Interdigitalelektrodensystem (1a) und auf einer dieser Fläche gegenüberliegenden Fläche eine Heizvorrichtung angeordnet ist.

9. Teilchensensor nach einem der Ansprüche 1 bis 8, **dadurch gekennzeichnet, dass** der Sensor mindestens ein erstes (1a) und ein zweites (1b) Interdigitalelektrodensystem umfasst.

10. Teilchensensor nach Anspruch 9, **dadurch gekennzeichnet, dass** das erste (1 a) und das zweite (1 b) Interdigitalelektrodensystem auf gegenüberliegenden Flächen des Messraums (3) angeordnet sind.

11. Teilchensensor nach Anspruch 9 oder 10, **dadurch gekennzeichnet, dass** das erste (1a) und zweite (1b) Interdigitalelektrodensystem unabhängig voneinander beheizbar sind.

12. Verfahren zur Detektion von Teilchen in einem Gasstrom mit einem Teilchensensor nach einem der Ansprüche 9 bis 11, in dem
- in einem ersten Verfahrensschritt an das erste Interdigitalelektrodensystem (1 a) eine Messspannung angelegt und die Teilchenmenge auf der Basis einer Spannungs-, Strom- oder Widerstandsänderung an dem ersten Interdigitalelektrodensystem (1a) bestimmt wird, insbesondere wobei das zweite Interdigitalelektrodensystem (1b) während des ersten Verfahrensschritts regeneriert wird, oder an das zweite Interdigitalelektrodensystem ebenfalls eine Messspannung angelegt und die Teilchenmenge auf der Basis einer Spannungs-, Strom- oder Widerstandsänderung an dem zweiten Interdigitalelektrodensystem (1 b) bestimmt wird; und
- in einem zweiten Verfahrensschritt an das zweite Interdigitalelektrodensystem (1b) eine Messspannung angelegt und die Teilchenmenge auf der Basis einer Spannungs-, Strom- oder Widerstandsänderung an dem zweiten Interdigitalelektrodensystem (1b) bestimmt wird, insbesondere wobei das erste Interdigitalelektrodensystem (1 a) während des zweiten Verfahrensschritts regeneriert wird, oder an das erste Interdigitalelektrodensystem (1a) ebenfalls eine Messspannung angelegt und die Teilchenmenge auf der Basis einer Spannungs-, Strom- oder Widerstandsänderung an dem ersten Interdigitalelektrodensystem bestimmt wird; und
- die Verfahrensschritte alternierend wiederholt werden.

13. Verfahren zur Herstellung eines Teilchensensors nach einem der Ansprüche 1 bis 11, in dem
- eine Mehrschichtfolie, welche mindestens ein Interdigitalelektrodensystem und eine Heizvorrichtung oder eine Temperaturvorrichtung oder eine oder mehrere Durchkontaktierungen oder eine oder mehrere Isolationsschichten umfasst, durch ein Druck-, Laminier- oder Sprüh-Verfahren hergestellt wird, und
- die Mehrschichtfolie auf ein Trägerelement transferiert wird.

14. Verfahren nach Anspruch 13 zur Herstellung eines Teilchensensors nach einem der Ansprüche 1 bis 11, in dem
- eine Folie, welche einen Folienbereich und einen dazu benachbarten Mehrschichtbereich aufweist, der mindestens ein Interdigitalelektrodensystem und eine Heizvorrichtung oder eine Temperaturvorrichtung oder eine oder mehrere Durchkontaktierungen oder eine oder mehrere Isolationsschichten umfasst, durch ein Druck-, Laminier- oder Sprüh-Verfahren hergestellt wird,
- die Folie in der Art um einen Kern gewickelt wird, dass das Interdigitalelektrodensystem des Mehrschichtbereichs auf der Innenseite des Wickels angeordnet ist und der Folienbereich durch eine oder mehrere Umwicklungen das Trägerelement ausbildet,
- das gewickelte Folienelement laminiert wird,
- der Kern entfernt wird, und
- das laminierte Folienelement gesintert wird.

15. Verfahren nach Anspruch 13 zur Herstellung eines Teilchensensors nach einem der Ansprüche 1 bis 11, in dem
- mindestens eine Mehrschichtfolie, welche mindestens ein Interdigitalelektrodensystem und eine Heizvorrichtung oder eine Temperaturvorrichtung oder eine oder mehrere Durchkontaktierungen oder eine oder mehrere Isolationsschichten umfasst, durch ein Druck-, Laminier- oder Sprüh-Verfahren hergestellt wird,
- mindestens eine Mehrschichtfolie in der Art auf einen Kern angeordnet wird, dass das Interdigitalelektrodensystem auf der dem Kern zugewandten Seite angeordnet ist,
- die Mehrschichtfolie/n in einem Keramikspritzguss-Prozess mit einer keramischen Masse umspritzt wird, und
- der Kern entfernt wird.

16. Verfahren nach Anspruch 13 zur Herstellung eines Teilchensensors nach einem der Ansprüche 1 bis 11, in dem
- zwei Seitenschalen hergestellt werden,
- mindestens ein Interdigitalelektrodensystem auf eine im Endzustand innenliegende Fläche einer Seitenschale aufgebracht wird, und
- die Seitenschalen zusammengefügt werden.

## Claims

1. Particle sensor for detecting particles in a gas flow, comprising
- at least one interdigital electrode system (1a, 1b) comprising at least two interdigital electrodes engaging in one another in a comb-like manner, and
- a carrier element (2),
wherein a measuring chamber (3) with at least one gas inlet opening (4) and at least one gas outlet opening (5) is formed in the carrier element (2), at least one interdigital electrode system (1) being arranged on a surface of the measuring chamber (3), **characterized in that** the carrier element (2) has a substantially rotationally symmetrical outer wall.

2. Particle sensor according to Claim 1, **characterized in that** the carrier element (2) has a reduced wall thickness in the region of the measuring chamber.

3. Particle sensor according to Claim 1 or 2, **characterized in that** the carrier element (2) is formed by at least a first side shell (2a) and a second side shell (2c).

4. Particle sensor according to one of Claims 1 to 3, **characterized in that** the carrier element (2) is formed by a first side shell (2a) and a second side shell (2c) and an intermediate layer (2b) arranged in between.

5. Particle sensor according to one of Claims 1 to 4, **characterized in that** the intermediate layer (2b) is formed from a thermally insulating material.

6. Particle sensor according to one of Claims 1 to 5, **characterized in that** the carrier element (2) has a projection running circumferentially around the outer wall of the carrier element (2).

7. Particle sensor according to one of Claims 1 to 6, **characterized in that** the interdigital electrode system (1a) substantially covers the entire circumferential surface of the measuring chamber (3).

8. Particle sensor according to one of Claims 1 to 7, **characterized in that** the interdigital electrode system (1a) is arranged on one surface of the measuring chamber (3) and a heating device is arranged on a surface lying opposite this surface.

9. Particle sensor according to one of Claims 1 to 8, **characterized in that** the sensor comprises at least a first interdigital electrode system (1a) and a second interdigital electrode system (1b).

10. Particle sensor according to Claim 9, **characterized in that** the first interdigital electrode system (1a) and the second interdigital electrode system (1b) are arranged on opposite surfaces of the measuring chamber (3).

11. Particle sensor according to Claim 9 or 10, **characterized in that** the first interdigital electrode system (1a) and the second interdigital electrode system (1b) are heatable independently of one another.

12. Method for detecting particles in a gas flow with a particle sensor according to one of Claims 9 to 11, in which
- in a first method step, a measuring voltage is applied to the first interdigital electrode system (1a) and the amount of particles is determined on the basis of a change in voltage, current or resistance at the first interdigital electrode system (1a), in particular wherein the second interdigital electrode system (1b) is regenerated during the first method step, or a measuring voltage is likewise applied to the second interdigital electrode system and the amount of particles is determined on the basis of a change in voltage, current or resistance at the second interdigital electrode system (1b); and
- in a second method step, a measuring voltage is applied to the second interdigital electrode system (1b) and the amount of particles is determined on the basis of a change in voltage, current or resistance at the second interdigital electrode system (1b), in particular wherein the first interdigital electrode system (1a) is regenerated during the second method step, or a measuring voltage is likewise applied to the first interdigital electrode system (1a) and the amount of particles is determined on the basis of a change in voltage, current or resistance at the first interdigital electrode systems; and
- the method steps are repeated alternately.

13. Method for producing a particle sensor according to one of Claims 1 to 11, in which
- a multilayer film which comprises at least one interdigital electrode system and a heating device or a temperature device or one or more plated-through holes or one or more insulation layers is produced by a printing, laminating or spraying process, and
- the multilayer film is transferred onto a carrier element.

14. Method according to Claim 13 for producing a particle sensor according to one of Claims 1 to 11, in which
- a film, which comprises a film region and, adjacent thereto, a multilayer region which comprises at least one interdigital electrode system and a heating device or a temperature device or one or more plated-through holes or one or more insulation layers is produced by a printing, laminating or spraying process,
- the film is wound around a core in such a manner that the interdigital electrode system of the multilayer region is arranged on the inner side of the wound formation and the film region forms the carrier element by one or more windings,
- the wound film element is laminated,
- the core is removed, and
- the laminated film element is sintered.

15. Method according to Claim 13 for producing a particle sensor according to one of Claims 1 to 11, in which
- at least one multilayer film, which comprises at least one interdigital electrode system and a heating device or a temperature device or one or more plated-through holes or one or more insulation layers, is produced by printing, laminating or spraying process,
- at least one multilayer film is arranged on a core in such a manner that the interdigital electrode system is arranged on the side facing the core,
- the multilayer film(s) is/are encapsulated in a ceramic compound in a ceramic injection-moulding process, and
- the core is removed.

16. Method according to Claim 13 for producing a particle sensor according to one of Claims 1 to 11, in which
- two side shells are produced,
- at least one interdigital electrode system is applied to a surface of a side shell that is lying on the inner side in the end state, and
- the side shells are joined together.

## Revendications

1. Capteur de particules destiné à détecter des particules dans un flux gazeux, comprenant
- au moins un système d'électrodes interdigitées (1a, 1b), constitué d'au moins deux électrodes interdigitées s'emboîtant à la manière de peignes, et
- un élément de support (2),
dans lequel un espace de mesure (3) comportant au moins un orifice d'entrée de gaz (4) et au moins un orifice de sortie de gaz (5) est disposé dans l'élément de support (2), dans lequel au moins un système d'électrodes interdigitées (1) est disposé sur une surface de l'espace de mesure (3), **caractérisé en ce que** l'élément de support (2) présente une paroi extérieure sensiblement symétrique de rotation.

2. Capteur de particules selon la revendication 1, **caractérisé en ce que** l'élément de support (2) présente dans la zone de l'espace de mesure une épaisseur de paroi réduite.

3. Capteur de particules selon la revendication 1 ou 2, **caractérisé en ce que** l'élément de support (2) est formé d'au moins d'une première (2a) et d'une deuxième (2c) enveloppe latérale.

4. Capteur de particules selon l'une quelconque des revendications 1 à 3, **caractérisé en ce que** l'élément de support (2) est constitué d'une première (2a) et d'une deuxième (2c) enveloppe latérale, et d'une couche intermédiaire (2b) disposée entre celles-ci.

5. Capteur de particules selon l'une quelconque des revendications 1 à 4, **caractérisé en ce que** la couche intermédiaire (2b) est constituée d'un matériau thermiquement isolant.

6. Capteur de particules selon l'une quelconque des revendications 1 à 5, **caractérisé en ce que** l'élément de support (2) présente une saillie le long du pourtour de la paroi extérieure de l'élément de support (2).

7. Capteur de particules selon l'une quelconque des revendications 1 à 6, **caractérisé en ce que** le système d'électrodes interdigitées (1a) recouvre sensiblement la totalité de la surface circonférentielle de l'espace de mesure (3).

8. Capteur de particules selon l'une quelconque des revendications 1 à 7, **caractérisé en ce que** le système d'électrodes interdigitées (1a) est disposé sur une surface de l'espace de mesure (3) et **en ce qu'**un dispositif de chauffage est disposé sur une surface opposée à ladite surface.

9. Capteur de particules selon l'une quelconque des revendications 1 à 8, **caractérisé en ce que** le capteur comprend au moins un premier (11) et un deuxième (1b) système d'électrodes interdigitées.

10. Capteur de particules selon la revendication 9, **caractérisé en ce que** les premier (1a) et deuxième (1b) systèmes d'électrodes interdigitées sont disposés sur des surfaces opposées de l'espace de mesure (3).

11. Capteur de particules selon la revendication 9 ou 10, **caractérisé en ce que** les premier (1a) et deuxième (1b) systèmes d'électrodes interdigitées peuvent être chauffés indépendamment l'un de l'autre.

12. Procédé pour la détection de particules dans un flux gazeux au moyen d'un capteur de particules selon l'une quelconque des revendications 9 à 11, dans lequel
- lors d'une première étape du procédé, une tension de mesure est appliquée au premier système d'électrodes interdigitées (1a) et en ce que la quantité de particules est déterminée sur la base d'une variation de tension, de courant ou de résistance au niveau du premier système d'électrodes interdigitées (1a), et plus particulièrement, dans lequel le deuxième système d'électrodes interdigitées (1b) est régénéré pendant la première étape du procédé, ou une tension de mesure est également appliquée au deuxième système d'électrodes interdigitées et la quantité de particules est déterminée sur la base d'une variation de tension, de courant ou de résistance au niveau du deuxième système d'électrodes interdigitées (1b) ; et
- lors d'une deuxième étape du procédé, une tension de mesure est appliquée au deuxième système d'électrodes interdigitées (1b) et la quantité de particules est déterminée sur la base d'une variation de tension, de courant ou de résistance au niveau du deuxième système d'électrodes interdigitées (1b), et plus particulièrement, dans lequel le premier système d'électrodes interdigitées (1a) est régénéré pendant la deuxième étape de procédé, ou une tension de mesure est également appliquée au premier système d'électrodes interdigitées (1a) et la quantité de particules est déterminée sur la base d'une variation de tension, de courant ou de résistance au niveau du premier système d'électrodes interdigitées ; et
- les étapes du procédé sont répétées en alternance.

13. Procédé pour la fabrication d'un capteur de particules selon les revendications 1 à 11, dans lequel
- un film multicouche qui comprend au moins un système d'électrodes interdigitées et un dispositif de chauffage ou un dispositif de régulation de température ou une ou plusieurs traversées métallisées ou une ou plusieurs couches d'isolation, est réalisé par un procédé de compression, de stratification ou de pulvérisation, et
- le film multicouche est transféré sur un élément de support.

14. Procédé selon la revendication 13 pour la fabrication d'un capteur de particules selon l'une quelconque des revendications 1 à 11, dans lequel
- un film qui présente une zone de film et une zone multicouche adjacente à celle-ci et qui comprend au moins un système d'électrodes interdigitées et un dispositif de chauffage ou un dispositif de régulation de température ou une ou plusieurs traversées métallisées ou une ou plusieurs couches d'isolation, est réalisé par un procédé de compression, de stratification ou de pulvérisation,
- le film est enroulé autour d'un noyau de manière à ce que le système d'électrodes interdigitées de la zone multicouche soit disposé sur la face interne de l'enroulement ou à ce que la zone de film forme l'élément de support par l'intermédiaire d'un ou plusieurs enveloppements,
- l'élément de film enroulé est stratifié,
- le noyau est retiré, et
- l'élément de film stratifié est fritté.

15. Procédé selon la revendication 13 pour la fabrication d'un capteur de particules selon l'une quelconque des revendications 1 à 11, dans lequel
- au moins un film multicouche qui comprend au moins un système d'électrodes interdigitées et un dispositif de chauffage ou un dispositif de régulation de température ou une ou plusieurs traversées métallisées ou une ou plusieurs couches d'isolation, est réalisé par un procédé de compression, de stratification ou de pulvérisation,
- au moins un film multicouche est disposé sur un noyau de manière à ce que le système d'électrodes interdigitées soit disposé sur la face qui est tournée vers le noyau,
- le ou les film(s) multicouches est ou sont enrobés par extrusion d'une masse céramique lors d'un processus de moulage par injection de céramique, et
- le noyau est retiré.

16. Procédé selon la revendication 13 pour la fabrication d'un capteur de particules selon l'une quelconque des revendications 1 à 11, dans lequel
- deux enveloppes latérales sont réalisées,
- au moins un système d'électrodes interdigitées est déposé sur une surface interne, à l'état final, d'une enveloppe latérale, et
- les enveloppes latérales sont réunies.
